# EUROPÄISCHE PATENTANMELDUNG

(11) **EP 2 196 510 A1**
(43) Veröffentlichungstag der Anmeldung: **16.06.2010**
(21) Anmeldenummer: 08171128.5
(22) Anmeldetag: 09.12.2008
(51) Int. Cl.: C09J 7/02, G09F 3/10

(54) **Etikett auf Basis einer Polyolefinfolie**

(71) Anmelder: AMC Pancke AG, 24568 Kaltenkirchen (DE)
(72) Erfinder: Schaps, Wolfgang, 22395 Hamburg (DE); Hamou, Nasreddine, 20257 Hamburg (DE)
(74) Vertreter: UEXKÜLL & STOLBERG

(57) **Zusammenfassung**

Die Erfindung betrifft ein Etikett für einen Gegenstand. Das Etikett umfasst (1) eine Basisschicht, die eine gegossene Polyolefinfolie umfasst, (2) einen Acrylatkleber auf der Basisschicht, (3) eine gegenüber dem Kleber (2) antihaftende Schicht und (4) eine Trägerschicht. Erfindungsgemäße Etiketten eignen sich insbesondere für Mehrwegbehälter.

## Beschreibung

Die vorliegende Erfindung betrifft ein Etikett für das Aufkleben auf einen Gegenstand, insbesondere einen Mehrwegbehälter. Ferner betrifft die Erfindung die Verwendung des Etiketts sowie mit einem solchen Etikett versehene Gegenstände.

In der Getränkeindustrie werden Behälter häufig wiederverwendet. Dafür ist ein Waschen der Behälter notwendig, was üblicherweise mit einer alkalischen Waschlösung (Waschlauge) und in mehreren Stufen (Waschbädern) erfolgt. Dabei lösen sich die Etiketten zumindest teilweise von dem Mehrwegbehälter. Hinzu kommt, dass Mehrwegbehälter bei vielen Produktgruppen, wie bei Bierflaschen, standardisiert sind. Damit können verschiedene Getränkeanbieter, wie etwa Brauereien, auf den gleichen Typ von Mehrwegbehälter zugreifen und der logistische Aufwand des Mehrwegsystems verringert sich. Bei Mehrwegbehältern ist es demzufolge üblich, die verwendeten Etiketten beim Waschen vollständig abzulösen.

Beispielsweise ist es möglich, ein Etikett auf Papierbasis zusammen mit einem Nassleim einzusetzen, wobei die Wasserdurchlässigkeit von Papier ausgenutzt wird. Der Einsatz von Nassleim führt jedoch zu einer Kontamination der Etikettiermaschinen. Außerdem geht der Nassleim in der Waschlösung vollständig in Lösung, was die Konzentration des Nassleims in der Waschlösung erhöht. Deshalb müssen die Flaschen zwangsläufig mehrfach gewaschen werden. Aus diesem Grund sind Selbstklebeetiketten vorgeschlagen worden.

Außerdem können Etiketten auf Papierbasis nicht transparent gefertigt werden, was die Möglichkeiten einschränkt, Behälter ansprechend zu gestalten. Letztendlich lösen sich Etiketten auf Papierbasis zum Teil in der Waschlösung und verunreinigen diese. Deshalb ist die Verwendung von Polymerfolien als Basis von Etiketten vorgeschlagen worden.

Die GB 2 411 878 A1 offenbart derartige Selbstklebeetiketten für Mehrwegflaschen auf Basis von Polymerfolien. Dafür wird die Polymerfolie mit einem Haftklebstoff versehen. Allerdings sind Polymerfolien üblicherweise wasserundurchlässig, weshalb deren Entfernung von dem Mehrwegbehälter erschwert wird. Für dieses Problem sind bereits verschiedene Lösungen vorgeschlagen worden.

Im Stand der Technik sind Etiketten für Mehrwegbehälter bekannt, die sich leicht ablösen lassen sollen. So beschreibt die EP 0 510 403 A1 ein Etikett, dessen Unterseite mittels eines in einer Waschflüssigkeit im wesentlichen voll löslichen Klebstoffs auf einen Gegenstand zu kleben ist. Als Basismaterial für den Klebstoff wird die Verwendung von Polyacrylsäureester empfohlen, wobei die Haftung des Klebstoffs vorzugsweise durch einen Haftvermittler verbessert wird. Um das Ablösen des Etiketts von dem Gegenstand in der Waschflüssigkeit zu erleichtern, bedeckt die Haftklebstoffschicht die Unterseite des Etiketts bevorzugt unter Freilassung unterspülbarer Zonen. Derartige Zonen führen jedoch dazu, dass das Etikett in der Ansicht eine bestimmte Struktur aufweist. Der bei transparenten Etiketten gewünschte No-Label-Look kann damit nicht erreicht werden.

In der EP 0 951 004 A1 wird ein Etikett beschrieben, das eine Trägermaterialschicht mit mindestens einer in zumindest einer Richtung gereckten Kunststofffolienschicht und einer Klebstoffschicht umfasst. Die gereckte Kunststofffolienschicht ist so ausgebildet, dass sie bei der Wärmeeinwirkung der bei der Ablösung des Etiketts eingesetzten heißen Waschflüssigkeit unter Überwindung der Haltekraft der auf den Gegenstand aufgeklebten Klebstoffschicht rückschrumpft. Die Klebstoffschicht enthält ferner einen dispergierbaren Klebstoff, der wenigstens bis zum betriebsmäßigen Ablösen des Etiketts von der Waschflüssigkeit im wesentlichen nicht auflösbar ist, so dass die Waschflüssigkeit nicht mit Klebstoff angereichert wird. Bevorzugt sind die Schrumpfkraft der Folienschicht und die Haftwirkung des Klebstoffs so aufeinander abgestimmt, dass sich das Etikett bei der Temperatur der Waschflüssigkeit vollständig von dem Behälter ablösen lässt.

In einer bevorzugten Ausführungsform gemäß EP 0 951 004 A1 weist die Trägermaterialschicht zwei Teilschichten mit unterschiedlichen thermischen Ausdehnungskoeffizienten auf, weshalb sich die Trägermaterialschicht bei Wärmeeeinwirkung aufrollt.

Außerdem ist aus der EP 1 564 706 A2 ein Etikett bekannt, das mittels Nassleim auf einen Mehrwegbehälter klebbar ist und eine gereckte Kunststofffolie aufweist, die zur Ablösung des Etiketts von dem Gegenstand unter Wärmeeinwirkung rückschrumpft. Dafür wird das Etikett auf der Leimseite flächenvergrößernd strukturiert.

Allerdings haben sich Etiketten, deren Ablösung auf dem Schrumpfen einer Kunststofffolie beruht, als nachteilig herausgestellt. Erstens ist die Steifheit des abgelösten Etiketts gering. Zweitens nimmt das Etikett eine kleinere Form an. Deshalb ist das Ausbringen der Etiketten aus der Waschlauge aufwändig und die Waschanlagen müssen besonders konstruiert werden, um ein Verstopfen von Abflüssen zu vermeiden. Drittens kann es dazu kommen, dass das geschrumpfte Etikett in das Innere des Behälters gespült wird. Dadurch wird der Behälter unbrauchbar und muss aussortiert werden.

Viertens läuft Waschlauge von den geschrumpften (und gegebenenfalls zusammengerollten) Etiketten nicht einfach ab. Insbesondere zusammengerollte Etiketten neigen dazu, beträchtliche Mengen Waschlauge einzuschließen und in nachfolgende Bäder zu verschleppen. Dies führt bei den Bädern zu unerwünscht kurzen Reinigungsintervallen.

Der vorliegenden Erfindung hat somit die Aufgabe zugrundegelegen, die Probleme zu überwinden, die mit den Etiketten des Standes der Technik beobachtet werden. Insbesondere sollte ein Etikett für einen Mehrwegbehälter bereitgestellt werden, bei dem es nicht auf die Freilassung unterspülbarer Zonen (wie bei der EP 0 510 403), nicht auf die Verwendung einer Schrumpffolie (EP 0 951 004), nicht auf eine flächenvergrößernde Strukturierung und nicht auf den Einsatz einer Feuchtigkeit aufnehmenden Schicht ankommt.

Es wurde nun gefunden, dass diese Aufgaben durch ein Etikett für das Aufkleben auf einen Gegenstand gelöst werden, das
(1) eine Basisschicht, die eine gegossene Polyolefinfolie umfasst,
(2) einen Acrylatkleber auf der Basisschicht,
(3) eine gegenüber dem Kleber (2) antihaftende Schicht und
(4) eine Trägerschicht umfasst.

Erfindungsgemäße Etiketten zeichnen sich dadurch aus, dass sie sich leicht von Mehrweggehältern ablösen lassen.

### (1) Basisschicht

Beispielhafte Polyolefine für die Schicht (1) sind in der GB 2 411 878 A1 offenbart. In einer bevorzugten Ausführungsform handelt es sich bei dem Polyolefin um ein Polyethylen oder Polypropylen, insbesondere Polyethylen. Dabei ist es möglich, dass die Basisschicht neben der zwingend vorgeschriebenen mindestens einen Polyolefinfolie noch ein oder mehrere weitere Folien umfasst, die selbst wiederum eine Polyolefinfolie sein kann (können). In einer bevorzugten Ausführungsform besteht die Basisschicht aus einer einzigen Polyolefinfolie.

Die erfindungsgemäß eingesetzte gegossene Polyolefinfolie besitzt eine bessere Transparenz im Vergleich mit gereckten oder gegossenen Folien. Hervorzuheben ist auch die gleichmäßigere Extrusion von gegossenen Folien gegenüber Blasfolien.

In bevorzugten Ausführungsformen der Erfindung besitzt die Basisschicht (1) eine Dicke von 20 bis 200 µm, vorzugsweise 40 bis 150 µm, bevorzugter 50 bis 110 µm, insbesondere 70 bis 100 µm, wie 80 bis 90 µm.

Es hat sich erfindungsgemäß herausgestellt, dass gegossene Polyolefinfolien gegenüber Polyolefinblasfolien bevorzugt sind. Demzufolge umfasst die Basisschicht vorzugsweise keine Polyolefinblasfolie.

Bevorzugte Eigenschaften der Basisschicht (die vorzugsweise aus einer einzigen gegossenen Polyolefinfolie besteht) sind:
a) eine Dicke [µm] von 20 bis 200, vorzugsweise 40 bis 150, bevorzugter 50 bis 110, insbesondere 70 bis 100, wie 80 bis 90, gemessen gemäß DIN 53 353;
b) ein Flächengewicht [g/m²] von 15 bis 250, vorzugsweise 30 bis 150, bevorzugter 40 bis 110, insbesondere 65 bis 100, wie 75 bis 90, gemessen gemäß ISO 2286-2;
c) eine Zugfestigkeit [MPa] in Maschinenrichtung von 15 bis 29, vorzugsweise 17 bis 27, bevorzugter 19 bis 25, wie 20 bis 24, gemessen gemäß ISO 527 (Prüfkörper Typ 2, Länge 50 mm, Geschwindigkeit 300 mm/min),
d) eine Zugfestigkeit [MPa] in Querrichtung von 10 bis 24, vorzugsweise 12 bis 22, bevorzugter 14 bis 20, wie 15 bis 19, gemessen gemäß ISO 527 (Prüfkörper Typ 2, Länge 50 mm, Geschwindigkeit 300 mm/min),
e) eine Reißdehnung [%] in Quer- und Maschinenrichtung von 100 bis 1000, vorzugsweise 300 bis 800, bevorzugter 400 bis 700, wie 500 bis 600, gemessen gemäß ISO 527 (Prüfkörper Typ 2, Länge 50 mm, Geschwindigkeit 300 mm/min),
f) eine Steifheit [mN] in Maschinenrichtung von 2 bis 20, vorzugsweise 3 bis 17, bevorzugter 5 bis 15, wie 8 bis 12, gemessen gemäß DIN 53 121 (gegebenenfalls gegen die Coronabehandelte Seite gemessen, Biegewinkel 15°, Länge 10 mm, Prüfkörperbreite 38 mm);
g) eine Steifheit [mN] in Querrichtung von 5 bis 23, vorzugsweise 6 bis 20, bevorzugter 8 bis 18, wie 11 bis 15, gemessen gemäß DIN 53 121 (gegebenenfalls gegen die Coronabehandelte Seite gemessen, Biegewinkel 15°, Länge 10 mm, Prüfkörperbreite 38 mm);
h) ein Glanz von 20 bis 150, vorzugsweise 25 bis 120, bevorzugter 35 bis 100, wie 55 bis 85, gemessen gemäß DIN 67 530 (bei einem Blickwinkel von 20° und mit einer Vakuumplatte Dr. Lange gemessen); und
i) eine Oberflächenspannung [mN/m] von 20 bis 80, vorzugsweise 30 bis 70, bevorzugter 40 bis 65, insbesondere 48 bis 56 (gemessen gemäß DIN 53 364 mit den Testfarben ARTE-COLOR).

Dabei beträgt der Schrumpf [%] der erfindungsgemäßen Basisschicht (die vorzugsweise aus einer einzigen Polyolefinfolie besteht) in Quer- und Maschinenrichtung vorzugsweise 0 (Null), gemessen gemäß DIN 53 377 (10 Minuten bei 70°C). Das heißt, dass die Polyolefinfolie in einer besonders bevorzugten Ausführungsform nicht gereckt ist.

Transparente Basisschichten sind besonders bevorzugt. Die Trübung einer solchen Basisschicht (die vorzugsweise aus einer einzigen gegossenen Polyolefinfolie besteht) beträgt, gemessen gemäß ASTM 1003 [%], 2 bis 20, vorzugsweise 3 bis 17, bevorzugter 5 bis 15, wie 8 bis 12.

Erfindungsgemäß insbesondere bevorzugt ist der Einsatz einer transparenten Polyethylenfolie als Basisschicht, die
a) eine Dicke von etwa 85 µm,
b) ein Flächengewicht von etwa 79 g/m²,
c) eine Zugfestigkeit in Maschinenrichtung von etwa 22 MPa,
d) eine Zugfestigkeit in Querrichtung von etwa 17 MPa,
e) eine Reißdehnung in Quer- und Maschinenrichtung von etwa 550%,
f) eine Steifheit in Maschinenrichtung von etwa 10 mN,
g) eine Steifheit in Querrichtung von etwa 13 mN,
h) ein Glanz von etwa 75,
i) eine Oberflächenspannung von etwa 52 mN/m und
j) eine Trübung von etwa 10 %
besitzt. Eine derartige Polyethylenfolie wird von der Renolit AG, Salzgitter, Deutschland, unter der Nummer 6952 vertrieben.

Darüber hinaus ist es möglich, Basisschichten einzusetzen, die nicht transparent (d.h. opak) sind. Eine bevorzugte opake Basisschicht (die vorzugsweise aus einer einzigen gegossenen Polyolefinfolie besteht) besitzt eine Opazität [%], gemessen gemäß DIN 53 146, von 50 bis 95, vorzugsweise 70 bis 90, bevorzugter 80 bis 88, wie 82 bis 86.

Bevorzugte Eigenschaften der opaken Basisschicht (die vorzugsweise aus einer einzigen gegossenen Polyolefinfolie besteht) sind:
a) eine Dicke von etwa 85 µm;
b) ein Flächengewicht von etwa 86 g/m²;
c) eine Zugfestigkeit in Maschinenrichtung von etwa 22 MPa;
d) eine Zugfestigkeit in Querrichtung von etwa 17 MPa;
e) eine Reißdehnung in Quer- und Maschinenrichtung von etwa 520%;
f) eine Steifheit in Maschinenrichtung von etwa 10 mN;
g) eine Steifheit in Querrichtung von etwa 13 mN;
h) ein Glanz von etwa 60;
i) eine Oberflächenspannung von etwa 52 mN/m und
j) eine Opazität von etwa 84 %.

Derartige Polyethylenfolien werden von der Renolit AG, Salzgitter, Deutschland, unter der Nummer 6953, vertrieben.

Die erfindungsgemäß eingesetzte (transparente oder opake) Basisschicht, die vorzugsweise eine einzige Polyolefinfolie ist, ist in einer bevorzugten Ausführungsform zumindest (und vorzugsweise nur) auf der Seite, auf der die Klebeschicht (2) aufgebracht wird, vorbehandelt. Vorbehandlungsverfahren sind bekannt und beispielsweise in dem oben zitierten Stand der Technik offenbart. In einer bevorzugten Ausführungsform wird das erfindungsgemäße Etikett mit einer Coronaentladung, einer Flammenbehandlung oder einem Haftvermittler vorbehandelt.

Besonders bevorzugt ist eine Vorbehandlung durch Coronaentladung.

Die Folie kann mit einem Acrylat-Topcoat ausgerüstet werden oder nur durch Corona- und/oder Flammenbehandlung vorbehandelt sein, und kann vollflächig oder nur teilweise bedruckt sein.

### (2) Acrylatkleber

Erfindungsgemäß eingesetzte Acrylatkleber können (i) lösungsmittelfrei oder (ii) wasserbasiert oder (iii) mit Hilfe eines organischen Lösungsmittels formuliert sein. In einer bevorzugten Ausführungsform ist der Acrylatkleber wasserbasiert und weitestgehend frei von flüchtigem organischen Lösungsmittel.

Bevorzugte Kleber besitzen eine Brookfield-Viskosität (bestimmt mit Spindel No. 2 bei 50 s⁻¹) von 10 bis 200 mPa*s, vorzugsweise 15 bis 170 mPa*s, insbesondere 20 bis 150 mPa*s.

In bevorzugten Ausführungsformen besitzen Kleber (2) eine Klebekraft (FINAT-Test No. 1, Féderation Internationale des Fabricants et Transformateurs d'Adhésifs et Thermocollants sur Papiers et Autres Supports, Den Haag, Niederlande, 24 h auf Glas) von 3 bis 20 N/25 mm, vorzugsweise 3,5 bis 12 N/25 mm, bevorzugter 4 bis 10 N/25 mm, insbesondere 4,5 bis 9 N/25 mm, wie 6 bis 8 N/25 mm.

Außerdem ist bevorzugt, dass der Kleber (2) einen Feststoffanteil von 20 bis 65 % besitzt, vorzugsweise 40 bis 60 %, insbesondere 45 bis 55 %, wie 47 bis 52 %.

In allen Ausführungsformen der Erfindung ist bevorzugt, dass der Kleber (2) in einer Menge von 8 bis 30 g/m² vorhanden ist, vorzugsweise 10 bis 20 g/m², insbesondere 13 bis 18 g/m².

Als Acrylatkleber sind wasserbasierte Acrylatdispersionskleber bevorzugt, die bei Kontakt des Etiketts mit 2%iger Natronlauge (30 s in einer auf 80 °C temperierten, 2%igen Natronlauge, dann 5 Minuten bei 70°C getrocknet) 80% oder mehr von ihrer Klebekraft verlieren.

Derartige Acrylatkleber sind bekannt. Besonders bevorzugt ist ein unter der Bezeichnung Acronal^{®} A245 (eingetragene Marke der BASF SE) vertriebener wasserbasierter Acrylatdispersionskleber. Bei diesem Kleber werden die funktionellen klebrig machenden Carboxylgruppen bei Kontakt mit der alkalischen Waschlösung durch die Natronlauge neutralisiert und verlieren dadurch Ihre Adhäsion zum Substrat, was zum Ablösen der Etiketten führt.

Die Haftung zum Substrat (Flaschenwand) fällt durch das Eintauchen in der Waschlösung so stark ab, dass das Folienetikett nicht mehr an der Flasche haftet, wobei die Klebebeschichtung (2) an dem Etikett haften bleibt. Sie bildet einen Film aus Natronlaugelösung zwischen dem Etikett und dem Substrat. Bei dieser Behandlung (in heißer Waschflüssigkeit 60 bis 80°C und 1 bis 2% NaOH) zeigt das Etikett keinerlei Schrumpf oder Dehnung. Die mechanischen Eigenschaften der Folie vor dem Eintauchen bleiben nach dem Eintauchen in der heißen Waschflüssigkeit unverändert. Die heiße Waschflüssigkeit unterwandert seitlich den Kleber, ohne durch die Kunststofffolie zu diffundieren. Die Ablösung des Etikettes erfolgt also allein durch die Wechselwirkung des Klebers mit der 1 bis 2% NaOH enthaltenden haltigen Waschflüssigkeit durch die Wärmewirkung (60 bis 80°C), ohne Schrumpf oder Dehnung der Basisschicht.

### (3) Gegenüber dem Kleber antihaftende Schicht

In einer bevorzugten Ausführungsform wird eine Silikonschicht (die lösungsmittelhaltig, lösungsmittelfrei oder ein wässriges System sein kann) als Antihaftmittel eingesetzt.

Dabei ist bevorzugt, dass die Schicht (3) in einer Menge von 0,1 bis 10 g/m² vorhanden ist, vorzugsweise 0,2 bis 5 g/m², insbesondere 0,2 bis 0,5 g/m².

### (4) Trägerschicht

Geeignete Trägerschichten des erfindungsgemäßen Etiketts, die vor dem Verspenden des Etiketts entfernt werden, sind ausgewählt aus Kunststoff (wie Polypropylen, PVC oder PET), hoch verdichtetem Papier (wie Glassinepapier, Clay-gestrichenem Kraftpapier und mit Polyethylen beschichtetem Kraftpapier) sowie Kombinationen davon.

Bevorzugte Flächengewichte der Trägerschicht (4) betragen 20 bis 200 g/m², vorzugsweise 30 bis 100 g/m², insbesondere 40 bis 90 g/m², wie 50 bis 70 g/m² oder 25 bis 50 g/m².

Darüber hinaus betrifft die Erfindung die Verwendung der erfindungsgemäßen Etiketten auf beliebigen Behältern, vorzugsweise Mehrwegbehältern wie Mehrwegflaschen. Geeignete Materialien für den Behälter sind ausgewählt aus Glas, Kunststoff und Metall. Bevorzugte Materialien sind Glas und Polyethylenterephthalat (PET).

Außerdem betrifft die Erfindung mit erfindungsgemäßen Etiketten versehene Behälter.

Die Vorteile der Erfindung ergeben sich insbesondere aus den folgenden Beispielen.

### Beispiel 1 (Vergleich)

Ein nicht erfindungsgemäßes Etikett mit den Schichten

| | |
|---|---|
| Schicht (1) | gegossene, transparente PE-Folie, Stärke 85 µm, |
| Schicht (2) | 20 bis 23 g/m² (ca. 20 µm) eines wässrigen Acrylatklebers (CR085 oder CR 87 von BASF SE; oder P58913 von Rohm and Haas Company), |
| Schicht (3) | 1 g/m² einer gegenüber der Schicht (2) antihaftenden Silikonschicht und |
| Schicht (4) | 62 g/m² Glassinepapier, |

wurde wie folgt hergestellt:

In einem Inline-Verfahren wurde Glassinepapier (4) mit Silikonschicht (3) beschichtet und Schicht (3) getrocknet. Daraufhin wurde mit dem wässrigen Acrylatkleber (2) beschichtet und dieser wurde gehärtet. Letztendlich wurde Schicht (1), die gegebenenfalls vorher durch eine Coronabehandlung vorbehandelt oder mit Decklack beschichtet worden war, zu einem Verbund aufkaschiert. Die Schichten (3) und (2) wurden thermisch gehärtet.

Mit dem Etikett versehene, gebrauchte Flaschen wurden in einer Waschanlage mit 2%iger Natronlauge bei 80 °C gespült. Unter diesen Bedingungen wurde erst nach etwa 8 Minuten eine Ablösung beobachtet.

### Beispiel 2

Es wurde wie in Beispiel 1 vorgegangen, außer dass anstelle des dort beschriebenen Klebers der Schicht (2) der Klebstoff Acronal^{®} A245 (eingetragene Marke der BASF SE, Ludwigshafen, Deutschland, früher Acronal^{®} DS3578) eingesetzt wurde. Unter den oben genannten Bedingungen löste sich das Etikett in weniger als 30 Sekunden.

## Patentansprüche

1. Etikett für das Aufkleben auf einen Gegenstand, insbesondere einen Mehrwegbehälter, das
(1) eine Basisschicht, die eine gegossene Polyolefinfolie umfasst,
(2) einen Acrylatkleber auf der Basisschicht,
(3) eine gegenüber dem Kleber (2) antihaftende Schicht und
(4) eine Trägerschicht umfasst.

2. Etikett nach Anspruch 1, **dadurch gekennzeichnet, dass** die Polyolefinfolie eine Polyethylen- oder Polypropylenfolie ist.

3. Etikett nach Anspruch 1 oder 2, **dadurch gekennzeichnet, dass** die Polyolefinfolie nicht gereckt ist.

4. Etikett nach einem der vorhergehenden Ansprüche, **dadurch gekennzeichnet, dass** die Basisschicht (1) eine Dicke von 20 bis 200 µm besitzt, vorzugsweise 40 bis 150 µm, bevorzugter 50 bis 110 µm, insbesondere 70 bis 100 µm, wie 80 bis 90 µm.

5. Etikett nach einem der vorhergehenden Ansprüche, **dadurch gekennzeichnet, dass** die Basisschicht (1) aus einer einzigen Polyolefinfolie besteht.

6. Etikett nach einem der vorhergehenden Ansprüche, **dadurch gekennzeichnet, dass** die Basisschicht eine transparente oder opake Schicht ist.

7. Etikett nach einem der vorhergehenden Ansprüche, **dadurch gekennzeichnet, dass** die Basisschicht einen prozentualen Schrumpf in Quer- und Maschinenrichtung von 0 (Null) besitzt, gemessen gemäß DIN 53 377 (10 Minuten bei 70°C).

8. Etikett nach einem der vorhergehenden Ansprüche, **dadurch gekennzeichnet, dass** der Kleber (2) eine Klebekraft, gemessen gemäß FINAT 1, 24 h auf Glas, von 3 bis 20 N/25 mm besitzt, vorzugsweise 3,5 bis 12 N/25 mm, bevorzugter 4 bis 10 N/25 mm, insbesondere 4,5 bis 9 N/25 mm, wie 6 bis 8 N/25 mm.

9. Etikett nach einem der vorhergehenden Ansprüche, **dadurch gekennzeichnet, dass** der Kleber (2) einen Feststoffanteil von 20 bis 65 % besitzt, vorzugsweise 40 bis 60 %, insbesondere 45 bis 55 %, wie 47 bis 52 %.

10. Etikett nach einem der vorhergehenden Ansprüche, **dadurch gekennzeichnet, dass** die Brookfield-Viskosität des Klebers (2), bestimmt mit Spindel No. 2, 50 s⁻¹, 10 bis 200 mPa*s beträgt, vorzugsweise 15 bis 170 mPa*s, insbesondere 20 bis 150 mPa*s.

11. Etikett nach einem der vorhergehenden Ansprüche, **dadurch gekennzeichnet, dass** der Kleber (2) in einer Menge von 8 bis 30 g/m² vorhanden ist, vorzugsweise 10 bis 20 g/m², insbesondere 13 bis 18 g/m².

12. Etikett nach einem der vorhergehenden Ansprüche, **dadurch gekennzeichnet, dass** die Schicht (3) eine Silikonschicht ist, wobei die Schicht (3) vorzugsweise in einer Menge von 0,1 bis 10 g/m² vorhanden ist, bevorzugter 0,2 bis 5 g/m², insbesondere 0,2 bis 0,5 g/m².

13. Etikett nach einem der vorhergehenden Ansprüche, **dadurch gekennzeichnet, dass** der Träger (3) ausgewählt ist aus Kunststoff (wie Polypropylen, PVC oder PET), hoch verdichtetem Papier (wie Glassinepapier, Clay-gestrichenem Kraftpapier und mit Polyethylen beschichtetem Kraftpapier) sowie Kombinationen davon.

14. Verwendung des Etiketts gemäß einem der vorhergehenden Ansprüche auf einem Behälter.

15. Behälter, der ein Etikett gemäß einem der Ansprüche 1 bis 13 aufweist.
